# EUROPEAN PATENT SPECIFICATION

(11) **EP 3 724 585 B1**
(45) Date of publication and mention of the grant of the patent: **16.08.2023**
(21) Application number: 19773872.7
(22) Date of filing: 30.09.2019
(51) Int. Cl.: F26B 9/06, F26B 21/02, F26B 21/08, F26B 21/10, F26B 21/12, F26B 25/22, G01N 5/04

(54) **THERMAL TREATMENT APPARATUS**
WÄRMEBEHANDLUNGSVORRICHTUNG
APPAREIL DE TRAITEMENT THERMIQUE

(30) Priority: 04.10.2018 BE 201805678
(43) Date of publication of application: 21.10.2020
(73) Proprietor: Cee-Engineering Sprl, 1320 Hamme-Mille (BE)
(72) Inventor: BOSMANS, Koen, 1320 Nodebais (BE)
(74) Representative: Arnold & Siedsma
(86) International application number: PCT/EP2019/076398
(87) International publication number: WO 2020/070048

(56) References cited:
- EP-A2- 1 949 804
- WO-A1-2008/030162
- WO-A1-2008/120873
- CN-A- 106 524 684
- CN-A- 108 224 919
- US-A- 4 176 464
- US-A- 4 198 763
- US-A- 5 085 527
- US-A1- 2007 245 813
- US-A1- 2009 090 022

## Description

### FIELD OF THE INVENTION

This invention relates to a thermal treatment apparatus for products such as a bulk material.

### BACKGROUND OF THE INVENTION

According to a known solution, the determination of the loss of mass of a product during thermal treatment, for example during the drying process, requires the product to come into contact with a gas flow, the latter becoming altered from its original state once it has passed over the product. The measurements usually taken during thermal treatment are temperature, velocity, as well as the chemical composition of the gas flow, before and after contact with the product. The chemical composition of the gas flow can include: steam, perhaps saturated and/or superheated; air, perhaps moist; nitrogen, etc. The gas flow velocity itself is generally ascertained by means of a measurement of static and dynamic pressure, according to a known principle such as the Pitot principle.

It is therefore possible to quantify the mass flow of gas based on the above measurements. The difference between the mass flow measured after contact with the product and the mass flow measured before contact with the product matches the product's loss in mass during thermal treatment, or, in other words, the amount of water evaporated in the example of a drying process. However, this solution is not very accurate, with related errors on the loss of mass of the product reaching around 20 per cent. Thus, devising an industrial facility based on this solution is not practicable, even if the latter provides a quality performance regarding the amount of water being evaporated from the product.

According to a solution known in the industry, a thermal treatment apparatus operating using a so-called *continuous* method can comprise a tunnel in which the product is inserted and moved along for example on a conveyor belt, as well as a treatment chamber, a fan, a burner and thermal, pressure and humidity sensors. A gas flow is directed at the product, said gas becoming colder and moister during the thermal treatment of the product. In the case of a drying process, because the part of the product situated at the beginning of the conveyor belt experiences the coldest and wettest gas, it is necessary to create a non-uniform atmosphere within the tunnel, depending on the position of the product on the conveyor belt, and this complicates the implementation of such an industrial process. Technical improvements are therefore required in this area.

EP 1 949 804 A2 discloses a grape drying plant which comprises one or more drying rooms, containment means for the storage of the grapes, constituted by racks or crates that can be placed in the drying rooms for an over-ripening period, an air treatment plant adapted to regulate, according to settable values, the humidity, temperature and ventilation in the drying room, a detection sensor of the weight associated with the grape containment means subject to sending a signal to a control unit of the air treatment plant for conditioning the humidity, temperature and ventilation values. The weight detection sensor consists of a load cell underneath a loading pallet of the crates. Such cell emits, as a function of the detected weight, an analogue signal in the range of 4-20 mA that is transduced by the control unit of the air treatment unit, in order to condition the humidity and/or temperature and/or ventilation values as a function of the actual weight loss that is verified in the grapes. On the control unit, composed of the PLC of the conditioning unit, it is possible to initially set a programmed weight loss function through the setting of the temperature and/or humidity and/or ventilation values that the environment of the drying room must assume during the over-ripening time. Such weight loss function is calculated by detecting the sugar quantity initially present in the individual grapes and setting the sugar quantity that one wishes to obtain after a preestablished over-ripening time.

US 4 176 464 A discloses a method and apparatus for controlling the drying of lumber and the like. During drying, the weight of a lumber charge is continuously monitored to indicate both total weight loss and rate of weight loss. These data are employed, automatically or manually, to adjust drying action so as to control the moisture-removal rate and stop drying action when the desired terminal dryness is reached. Multi-point weight monitoring is used to provide localized moisture-content data. The latter data is used further to adjust drying action to promote uniform moisture levels throughout a charge during drying.

WO 2008/120873 A1 discloses a microwave vacuum dry device allowing to measure weight of the raw material before and after drying and to discharge steam in the course of drying process. The device allows real time weight verification. With the joint as a connecting device, load cell of the weight measuring apparatus directly supports the conveyor belt on which the raw material is placed.

US 5 085 527 A discloses a digital microwave oven mechanically interfaced with a precision digital balance, the oven and balance being operatively interfaced with the computer. As drying in the microwave oven progresses, the computer monitors weight loss of the test sample indicated by the balance and controls microwave power levels according to program instructions.

US 4 198 763 A1 discloses a chamber, or tank, sealable by closing its cover and in which green lumber, agricultural products and/or earthenware to be dried can be artificially dried to the desired degree. The chamber has means for measuring the degree of drying or moisture content of the material to be dried, and means to heat, moisten or dampen the inside of the chamber and to reduce the inside pressure of the chamber. Such processes are carried out in several steps, thereby changing the atmospheric conditions in the chamber in phased programs. This control is performed by checking the drying condition of the material as it is in the chamber.

### SUMMARY

The objective of embodiments of the invention is to propose a thermal treatment apparatus, for example for the drying process, for products such as a bulk material, which would be capable of improving the accuracy of determination of the product's loss of mass during thermal treatment. More specifically, embodiments of the invention aim at proposing a thermal treatment apparatus for products such as a bulk material, which operates using what is known as a *discontinuous* or *batch* method, and which would be capable of simulating the operation of a continuous thermal treatment apparatus on an industrial scale whilst achieving space savings on account of an overall volume reduction.

According to one aspect of the invention, an apparatus is proposed for thermal treatment of a product, such as a bulk material among others, said apparatus comprising: a treatment chamber configured for treating said product; a generation unit configured for generating a flow of gas and/or steam through the treatment chamber; a weight determination means configured for determining a value representative of the weight of said product as a function of time during the treatment of the product; as well as a conditioning means configured for controlling as a function of time at least one property of the gas and/or steam flow through the treatment chamber, as a function of the determined value representative of the weight of the product. The weight determination means is located outside the treatment chamber. The treatment chamber comprises a support configured for supporting the product during treatment. Said support is connected to the weight determination means such that the weight determination means measures the weight of the support and the value representative of the weight of the product on the support. The support is connected to the weight determination means by at least one connection element. Said at least one connection element partially protrudes outside the treatment chamber through a wall of the treatment chamber. The weight determination means is configured for determining said value representative of the weight of the product in substantially real time. The conditioning means is configured for controlling said at least one property of the gas and/or steam flow in substantially real time.

The invention is an apparatus for drying a product according to claim 1.

An embodiment of the invention is therefore based on a thermal treatment apparatus, for example for a drying process, enabling the monitoring over time of a value representative of the weight of the product to be treated. The above value may, for example, correspond to the water mass which was evaporated during a drying process. Thus, a mass balance of evaporated water may not only be obtained on the basis of gas mass flow values before and after contact with the product, but the mass balance of evaporated water may also be ascertained throughout the process of drying of the product. This allows the production of a curve of the amount of water evaporated as a function of time. As the conditioning means are configured for controlling as a function of time at least one property of the gas and/or steam flow through the treatment chamber, on the basis of the determined value representative of the weight of the product, it is possible to set up a product thermal treatment apparatus using a discontinuous method capable of simulating the operation of a continuous thermal treatment apparatus on an industrial scale, whilst improving the accuracy of determining the mass loss of the product during thermal treatment and effecting space savings. According to exemplary embodiments, thermal treatment comprises any one or more of the following treatments: drying, heating, roasting, pyrolysis, gasification, or a combination thereof.

Thus, in addition to the above-mentioned example of drying, this apparatus allows among other things heating, roasting, pyrolysis and gasification of products such as a bulk material. Thus, this apparatus is not limited to the evaporation of water from a product. It also allows, for example, for the treatment of used glass fibres in which organic components are found. The aim is therefore to gasify these organic components by heating the glass fibres, whilst preventing the entry of oxygen into the treatment chamber. Glass fibres can therefore be used again after thermal treatment, and the quantity of gasified organic components is determined by the weight loss of the glass fibres. In addition to evaporation, chemical reactions may occur within such apparatus, for example in tests using coffee beans. Thus, this apparatus allows a series of tests to be performed on a large number of different products. It also allows thermal treatment using either air or steam.

Typically, different stages are involved in the product's thermal treatment. In the example of a drying process, in the first instance, the density of water within the product is uniform. The product heating stage leads to a quantity of evaporation which increases with time, as it is easy to evaporate water on the surface of the product. The evaporation rate subsequently decreases, until it cancels out at a maximum, or peak, on the curve. Before the peak, the evaporation rate depends on the conditions of the atmosphere created around the product. Beyond the peak, the quantity of evaporated water decreases as a function of time and cancels out when all the water has been evaporated from the product. Moisture which has migrated from the product forms a barrier to further water migration. Thus, it is useful to know the rate of water dispersal within the product beyond the peak.

The determination of this evaporation peak can be useful for the sizing of thermal treatment apparatus, for example a drying apparatus. According to an embodiment, the weight determination means can be configured to acquire sufficient quantities of evaporated water over time, preferably in real time, to obtain an accurate time curve. It should be noted that certain products do not have a peak due to their chemical composition; their time curve shows immediately a declining quantity of evaporated water as a function of time.

The weight determination means can operate at ambient temperatures and does not have to be able to withstand the temperature range typically encountered in thermal treatment apparatus, namely up to 850°C.

Further, the above-mentioned arrangement of the weight determination means with respect to the support is in line with the fact that it is better to put the weight sensors on the outside of the treatment chamber while the support is located on the inside. At this stage, the type of wall is not specified; it could be the bottom, top or side wall of the treatment chamber.

According to a preferred embodiment, said at least one connection element is arranged using a seal such that the treatment chamber is impervious to air and/or gas. Said at least one connection element is allowed to move with respect to said wall along an axis, typically a vertical axis.

Thus, as the treatment chamber is impervious to air and/or all other gas, the determination of the value representative of the product weight is not compromised by the weight of the material which would have seeped into the treatment chamber, thereby improving the accuracy of weight measurements. Additionally, as the weight of the product varies over time, the connection element has to be free to move along an axis, in accordance with the product's weight change.

According to a preferred embodiment, the seal is placed between said at least one connection element and the wall of the treatment chamber.

According to an exemplary embodiment, the seal comprises a flexible seal configured for allowing said at least one connection element to move without friction along said axis.

According to another exemplary embodiment, the seal comprises a liquid seal, preferably an oil seal, configured for allowing said at least one connection element to move without friction along said axis.

Thus, this movement can be performed without friction or any other resisting force to this movement, to avoid disturbing the weight measurements. The two above-mentioned embodiments facilitate the design of the seal intended for this purpose.

According to a preferred embodiment, a material of said at least one connection element comprises a material having a low thermal conductivity.

Indeed, a material having a low thermal conductivity, in other words a thermal insulator, protects the weight determination means from potential heat damage. One example of such a material is Teflon, but other thermal insulators would be possible.

According to an exemplary embodiment, said at least one connection element is a pillar, and the wall is a bottom wall of the treatment chamber.

According to another exemplary embodiment, said at least one connection element is a suspension element, and the wall is a top wall of the treatment chamber.

Thus, the connection between the support and the weight determination means is made either through the floor or through the ceiling of the treatment chamber. These two embodiments have the advantage of being easily implemented, given that the weight is a locally vertical force.

According to a preferred embodiment, the weight determination means comprise at least one load cell.

Said at least one load cell shall measure only the weight of the support and the value representative of the weight of the product on the support. This allows the use of standard size load cells with good sensitivity, and thus increases the accuracy of weight measurements. In the case of a bulk material, it should be noted that what is effectively measured is the total weight of the product. Therefore, the gas and/or steam generation unit of this apparatus is preferably configured to generate a flow such that each particle of the product to be thermally treated receives substantially the same flow and such that, in the example of a drying process, the evaporation of water from each particle of the product taken separately is close to the average evaporation of water from the entire product.

According to an exemplary embodiment, said at least one load cell comprises a piezoelectric element.

Indeed, piezoelectric elements are load cell components which allow accurate weight measurement.

According to a preferred embodiment, the generation unit is configured for generating a gas and/or steam flow in an upward direction and/or in a downward direction through the treatment chamber. Thus, the product can be thermally treated in a more uniform way than in the case of a single direction flow of gas and/or steam, whether upward or downward. In the case of upward flow of gas and/or steam, the weight measured will be less, and this effect should be taken into account in the adjustment of the measured value. In the case of a bulk material, an alternative is to allow just a single gas and/or steam flow direction, and to vibrate the product in such a way as to change the surface which is exposed to the gas and/or steam flow.

According to a preferred embodiment, the weight determination means is configured for determining said value representative of the weight of the product periodically, at least every 30 seconds, and preferably at least every second.

According to the invention, the conditioning means is configured for adjusting said at least one property of the gas and/or steam flow, as a function of said changed determined value representative of the weight of the product.

According to a preferred embodiment, said at least one property of the gas and/or steam flow controlled by the conditioning means comprises any one or more of the following properties: temperature, velocity, moisture content, chemical composition, or a combination thereof. According to a preferred embodiment, the conditioning means is configured for controlling, preferably in real time, the temperature of the gas and/or steam flow as a function of the determined value representative of the weight of the product, such that said temperature is kept between 20°C and 850°C, preferably higher than 50°C.

According to a preferred embodiment, the conditioning means is configured for controlling, preferably in real time, the velocity of the gas and/or steam flow as a function of the determined value representative of the weight of the product, such that said velocity is kept between 0.1% m/s and 20 m/s, preferably higher than 0.5 m/s.

According to a preferred embodiment, the conditioning means is configured for controlling, preferably in real time, the moisture content of the gas and/or steam flow as a function of the determined value representative of the weight of the product, such that said moisture content is kept between 0.1% and 100%, preferably higher than 50%.

According to a preferred embodiment, the conditioning means is configured for controlling, preferably in real time, the oxygen content of the gas and/or steam flow as a function of the determined value representative of the weight of the product, such that said oxygen content is kept between 0% and 21%, preferably lower than 15%.

These temperature, velocity, moisture content and oxygen content values are, in fact, the preferred values to be taken into account in order to guarantee successful functioning of the thermal treatment apparatus in relation to this invention. The conditioning means is configured for controlling the aforementioned properties preferably in real time to improve the accuracy achieved by such apparatus.

According to a second aspect of the invention, there is proposed a use of an apparatus according to any of the previous embodiments for the thermal treatment of a product, such as a bulk material or others, such thermal treatment comprising any one or more of the following treatments: drying, heating, roasting, pyrolysis, gasification, or a combination thereof.

### BRIEF DESCRIPTION OF THE FIGURES

Embodiments of this invention will be described hereafter in greater detail, with reference to the attached drawings. In the drawings, identical reference numbers correspond to identical or similar characteristics.
Figure 1 shows a diagrammatic view of an example embodiment of a thermal treatment apparatus according to the invention;
Figure 2 shows a diagrammatic view of a detailed example embodiment of a thermal treatment apparatus according to the invention;
Figures 3a-3b show a diagrammatic view of two examples of embodiments of a treatment chamber according to the invention;
Figures 4a-4b show a diagrammatic view of two examples of embodiments of an interface between a connection element and a treatment chamber wall according to the invention;
Figures 5a-5b show a diagrammatic view of two other examples of embodiments of an interface between a connection element and a treatment chamber wall according to the invention.

### DESCRIPTION OF THE EMBODIMENTS

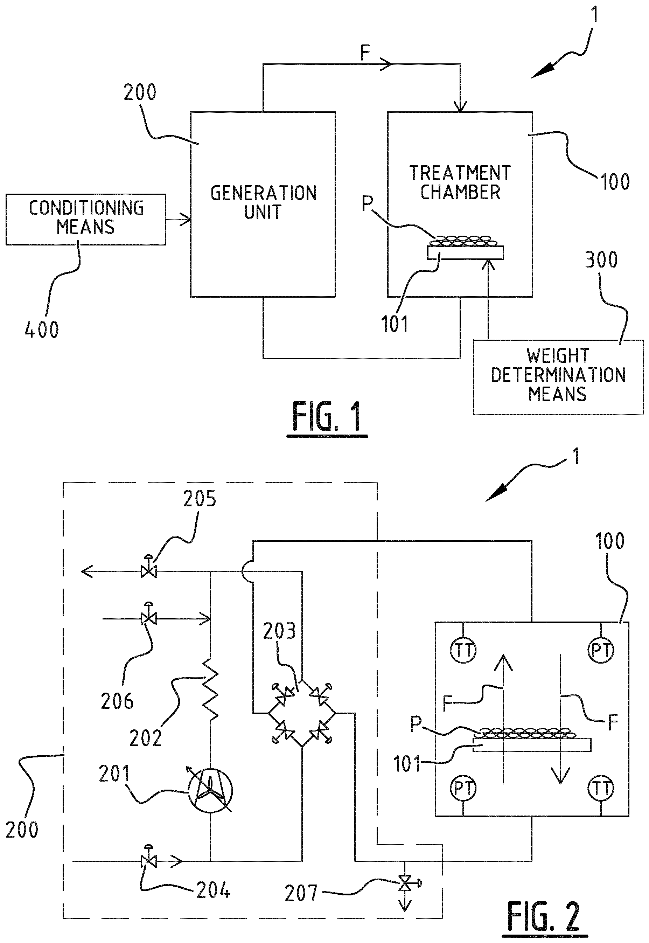

Figure 1 shows diagrammatically an example of an embodiment of a thermal treatment apparatus according to the invention.

In the example embodiment shown in Figure 1, an apparatus 1 for thermal treatment of a product P, such as a bulk material among others, comprises a treatment chamber 100 configured for treating said product P, a generation unit 200 configured for generating a gas and/or steam flow F through the treatment chamber 100, as well as a weight determination means 300 configured for determining a value representative of the weight of said product P as a function of time during the treatment of the product P, and a conditioning means 400 configured for controlling as a function of time at least one property of the gas and/or steam flow F through the treatment chamber 100, as a function of the determined value representative of the weight of the product P.

The thermal treatment apparatus 1 is therefore capable of monitoring the evolution over time of a value representative of the weight of the product P to be thermally treated. This value may, for example, correspond to the mass of water which has been evaporated from the product P during drying. Thus, the mass of evaporated water can also be ascertained throughout the product's drying process. This allows the creation of a curve showing the quantity of water evaporated over time. Thermal treatment comprises one or more of the following treatments: drying, heating, roasting, pyrolysis, gasification, or a combination thereof. Thus, the thermal treatment apparatus 1 is not limited to the evaporation of water from a product, but can also, for example, treat used glass fibres in which organic components are found, as explained above in this document. Thus, the thermal treatment apparatus 1 allows the operation of a series of tests on a large number of different products. It also allows a thermal treatment using: steam, perhaps saturated and/or superheated; air, perhaps moist; or nitrogen, etc.

The treatment chamber 100 comprises a support 101 configured for supporting the product P during treatment. This support 101 is connected to the weight determination means 300 such that the latter measures the weight of the support 101 and the value representative of the weight of the product P on the support 101.

The generation unit 200 is configured to generate a gas and/or steam flow F in an upward and/or downward direction through the treatment chamber 100. In the case of upward flow of gas and/or steam, the weight measured will be less, and this effect should be taken into account in the adjustment of the determined value representative of the weight of the product. In the case of a bulk material product P, an alternative option is to use only one direction of gas and/or steam flow F, for example downward, and to vibrate the product P in such a way as to change the surface which is exposed to the gas and/or steam flow F.

The weight determination means 300 can comprise at least one load cell, and is located outside the treatment chamber 100. Said at least one load cell can include a piezoelectric element. Furthermore, the weight determination means 300 is configured for determining said value representative of the weight of the product P substantially in real time. In this way, it can be configured to determine said value representative of the weight of the product P periodically, at least every 30 seconds, preferably at least every second.

The conditioning means 400 is configured for controlling said at least one property of the gas and/or steam flow F substantially in real time. Thus, it can be configured for adjusting said at least one property of the gas and/or steam flow F as a function of a modification of said determined value representative of the weight of the product P. Said at least one property of the gas and/or steam flow F controlled by the conditioning means 400 comprises any one or more of the following properties: temperature, velocity, moisture content, chemical composition, or a combination thereof. For example, the conditioning means 400 can be configured for controlling, substantially in real time, the temperature, velocity, moisture content and oxygen content of the gas and/or steam flow F, such that said temperature is kept between 20°C and 850°C, preferably higher than 50°C, such that said velocity is kept between 0.1 m/s and 20 m/s, preferably higher than 0.5 m/s, such that said moisture content is kept between 0.1% and 100%, preferably higher than 50%, and such that said oxygen content is kept between 0% and 21%, preferably lower than 15%.

Figure 2 shows diagrammatically an example of a detailed embodiment of a thermal treatment apparatus according to the invention.

In the embodiment example shown in Figure 2, the thermal treatment apparatus 1 comprises a treatment chamber 100, a generation unit 200 as well as a weight determination means and a conditioning means (not shown for the sake of clarity). The description of the functionality and characteristics of the above-mentioned components of the thermal treatment apparatus 1 set out in the text relating to Figure 1 are valid also for Figure 2.

The treatment chamber 100 can further comprise temperature transducers TT and pressure transducers PT. The generation unit 200 can further comprise an adjustable fan 201 for regulating the velocity of the gas and/or steam flow F, a device such as an electrical resistor 202 for regulating the temperature of the gas and/or steam flow F, as well as a device such as a Wheatstone bridge 203 to adjust the direction of the gas and/or steam flow F upwards and/or downwards.

Additionally, the generation unit can comprise several adjustable valves 204, 205, 206, 207. Valve 204 is included in a fresh air inlet system, while valve 205 is included in a waste gas exhaust system. Valve 206 meanwhile is part of a demineralised water injection system (located upstream or downstream of device 202), in a case where more moisture is required in the thermal treatment apparatus 1. It thus allows regulation of the moisture content in the gas and/or steam flow F. Finally, in a case where superheated steam is used, valve 207 is included in a system for removing excess steam. In fact, an overpressure is created following the evaporation of water from the product P. In the case of superheated steam, valves 204 and 205 are closed. At the beginning of treatment, the gas and/or steam flow has raised moisture content. During the treatment, this content is reduced as the product becomes drier. Moisture creation within the treatment chamber 100 is achievable when the product is relatively wet. If the product is relatively dry, or if the amount of the product is significantly lower than the volume of the treatment chamber 100, it can be useful to generate moisture in a part of the thermal treatment apparatus 1 which is upstream of the product.

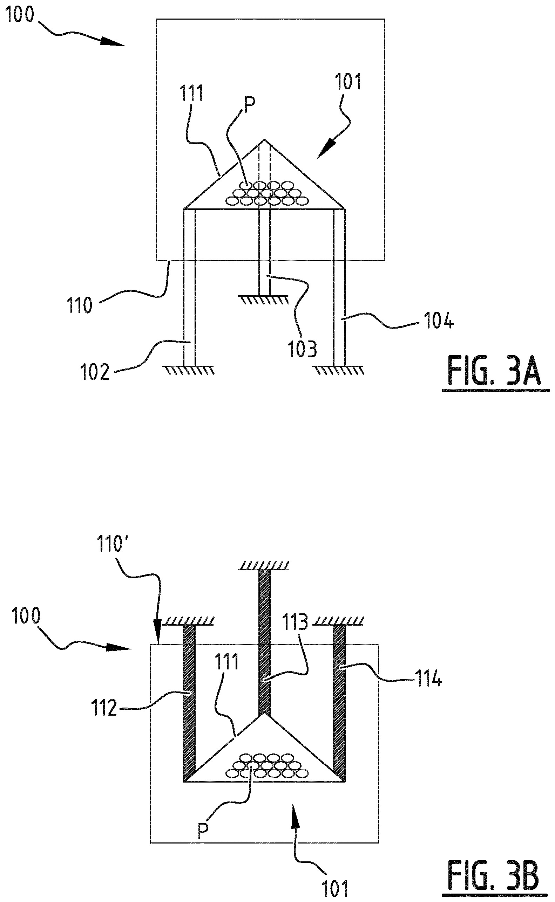

Figures 3a-3b show diagrammatically two examples of an embodiment of a treatment chamber according to the invention.

In the embodiment examples shown in Figures 3a-3b, the treatment chamber 100 comprises a support 101 configured for supporting the product P during treatment. The support 101 is connected to the weight determination means (not shown for the sake of clarity) in such a way that the latter measures the weight of the support 101 and the value representative of the weight of the product P on the support 101. The support can further comprise a plate 111 on which the product P sits. The support 101 is connected to the weight determination means by at least one connection element 102; 112 preferably by three connection elements 102, 103, 104; 112, 113, 114. Thus, preferably the plate would be in the shape of a triangle, even more preferably an equilateral triangle. For example, the three connection elements 102, 103, 104; 112, 113, 114 can be found at the vertices of the triangle. A person skilled in the art will understand that the number of connection elements could vary, as well as the shape of the plate.

The weight determination means can comprise at least one load cell, and is located outside of the treatment chamber 100. Thus, the weight determination means can operate at ambient temperatures and moisture levels and does not need to be able to withstand the range of temperatures or moisture levels which could be encountered in a thermal treatment apparatus, namely up to 850°C and in a superheated steam atmosphere, matching the highest moisture content. Additionally, said at least one load cell can comprise a piezoelectric element.

Said at least one connection element 102; 112 partially protrudes outside the treatment chamber 100 through a wall 110; 110' of the treatment chamber 100. It can be a bottom wall 110 as shown in Figure 3a, or may be a top wall 110 as shown in Figure 3b. In the first case, said at least one connection element corresponds to a pillar 102; in the second case it corresponds to a suspension element 112 such as a cable. In both cases, said at least one connection element 102; 112 is arranged using a seal (not shown for the sake of clarity) such that the treatment chamber 100 is impervious to air and/or to any other gas. Additionally, said at least one connection element 102; 112 is allowed to move without friction or any other resisting force to this movement with respect to the wall 110; 110' along an axis, typically a vertical axis.

A material of said at least one connection element 102; 112 can comprise a material with low thermal conductivity, in other words a thermal insulator, to protect the weight determination means from possible heat damage. An example of such material is Teflon, but a person skilled in the art will understand that other thermal insulators could be used.

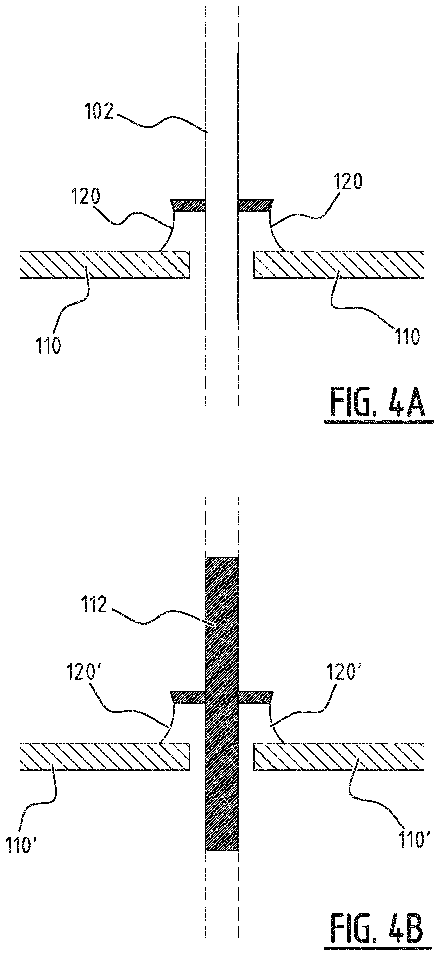

Figures 4a-4b show diagrammatically two examples of an embodiment of an interface between a connection element and a treatment chamber wall according to the invention. In the embodiment examples shown in Figures 4a-4b, said at least one connection element 102; 112 partially protrudes outside the treatment chamber (not shown for the sake of clarity) through a wall 110; 110' of the treatment chamber. It is further allowed to move with respect to the wall 110; 110' along an axis, typically a vertical axis. In the case shown in Figure 4a, said at least one connection element is a pillar 102; in the case shown in Figure 4b it is a suspension element 112, such as a cable.

Preferably, the seal 120; 120' is placed between said at least one connection element 102; 112 and the wall 110; 110' of the treatment chamber. The wall is a bottom wall 110 as shown in Figure 4a, or a top wall 110' as shown in Figure 4b. The seal comprises a flexible seal 120; 120' configured for allowing said at least one connection element 102; 112 to move without friction, or other resisting force to this movement, along an axis. The flexible seal 120; 120' comprises a material which is impervious to air and/or to any other gas, and resistant to high temperature. The flexible seal 120; 120' also comprises a material fulfilling the function of compensator, to compensate for the effect of thermal expansion of the materials forming the wall 110; 110', said at least one connection element 102; 112 and the flexible seal 120; 120'. It can be one single material capable of fulfilling all of the above functions, or a combination of materials fulfilling the different functions.

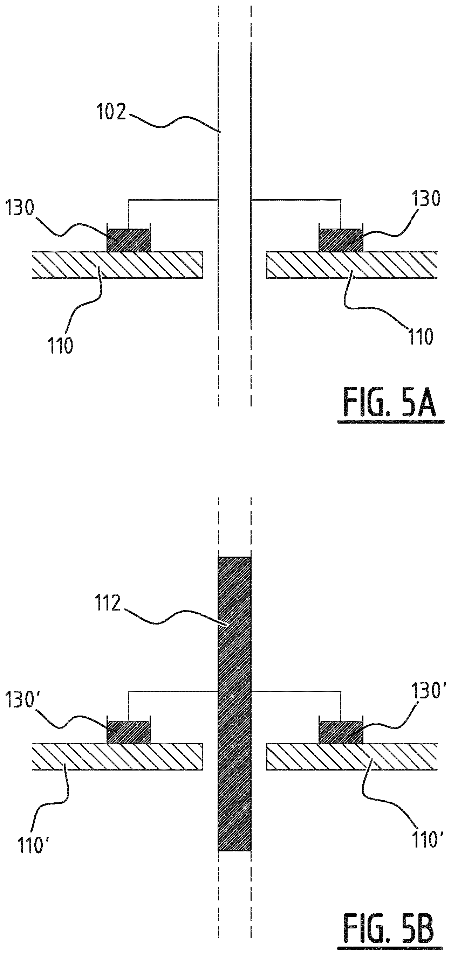

Figures 5a-5b show diagrammatically two other embodiment examples of an interface between a connection element and a treatment chamber wall according to the invention.

In the embodiment examples shown in Figures 5a-5b, the seal comprises a liquid seal 130; 130', preferably an oil seal, configured for allowing said at least one connection element 102; 112 to move without friction or other resisting force to this movement, along an axis. The liquid seal 130; 130' comprises at least one cell containing oil, or any other incompressible liquid, as well as at least one element attached to said at least one connection element 102; 112. This element is free to move in said at least one cell containing oil. This solution is similar to hydraulic cylinder technology, and ensures the treatment chamber's impermeability to air and/or gas (not shown for the sake of clarity). Furthermore, as the other functions and characteristics of seals 120; 120' are also common to seals 130; 130', their description as set out in the text in relation to Figures 4a-4b remains valid also for Figures 5a-5b.

The principles of the invention have been described above in conjunction with specific embodiments, but a person skilled in the art will understand that this description is simply an example and cannot limit the scope of protection which is determined by the attached claims.

## Claims

1. An apparatus (1) for drying a product (P), such as a bulk material among others, said apparatus comprising:
a treatment chamber (100) configured for treating said product (P);
a generation unit (200) configured for generating a gas and/or steam flow (F) through the treatment chamber (100);
a weight determination means (300) configured for determining a value representative of the weight of said product (P) in substantially real time during treatment of said product (P);
a conditioning means (400) configured for controlling in substantially real time at least one property of the gas and/or steam flow (F) through the treatment chamber (100), as a function of the determined value representative of the weight of said product (P);
wherein the treatment chamber (100) comprises a support (101) configured for supporting the product (P) during treatment; wherein said support (101) is connected to the weight determination means (300) such that the weight determination means (300) measures the weight of the support (101) and the value representative of the weight of the product (P) on the support (101);
wherein the support (101) is connected to the weight determination means (300) by at least one connection element (102; 112);
**characterized in that** the weight determination means (300) is located outside the treatment chamber (100); and
**in that** said at least one connection element (102; 112) partially protrudes outside the treatment chamber (100) through a wall (110; 110') of the treatment chamber (100).

2. The apparatus according to claim 1, wherein the at least one connection element (102; 112) is arranged using a seal such that the treatment chamber (100) is air and/or gas tight; wherein the at least one connection element (102; 112) is allowed to move with respect to said wall (110; 110') along a vertical axis;
wherein preferably said seal is placed between the at least one connection element (102; 112) and the wall (110; 110') of the treatment chamber (100).

3. The apparatus according to claim 2, wherein the seal comprises a flexible seal (120; 120') configured for allowing the at least one connection element (102; 112) to move without friction along said vertical axis; and/or
wherein the seal comprises a liquid seal (130; 130') configured for allowing the at least one connection element (102; 112) to move without friction along said vertical axis.

4. The apparatus according to any one of the previous claims, wherein a material of the at least one connection element (102; 112) comprises a material having a low thermal conductivity.

5. The apparatus according to any one of the previous claims, wherein the at least one connection element (102; 112) is a pillar (102); and wherein the wall (110; 110') is a bottom wall (110) of the treatment chamber (100); or
wherein the at least one connection element (102; 112) is a suspension element (112); and wherein the wall (110; 110') is a top wall (110') of the treatment chamber (100).

6. The apparatus according to any one of the previous claims, wherein the weight determination means (300) comprises at least one load cell;
wherein preferably the at least one load cell comprises a piezoelectric element.

7. The apparatus according to any one of the previous claims, wherein the generation unit (200) is configured for generating said gas and/or steam flow (F) in an upward direction and/or in a downward direction through the treatment chamber (100).

8. The apparatus according to any one of the previous claims, wherein the weight determination means (300) is configured for determining said value representative of the weight of the product (P) periodically, at least every 30 s, preferably at least every second.

9. The apparatus according to any one of the previous claims, wherein the conditioning means (400) is configured for adjusting the controlling of the at least one property of the gas and/or steam flow (F), as a function of said changed determined value representative of the weight of the product (P).

10. The apparatus according to any one of the previous claims, wherein said at least one property of the gas and/or steam flow (F) controlled by the conditioning means (400) comprises any one or more of the following properties: temperature, velocity, moisture content, chemical composition, or a combination thereof.

11. The apparatus according to any one of the previous claims, wherein the conditioning means (400) is configured for controlling, preferably in real time, as a function of said determined value representative of the weight of the product (P):
the temperature of the gas and/or steam flow (F), such that said temperature is kept between 20 °C and 850 °C, preferably higher than 50 °C; and/or
the velocity of the gas and/or steam flow (F), such that said velocity is kept between 0.1 m/s and 20 m/s, preferably higher than 0.5 m/s; and/or
the moisture content of the gas and/or steam flow (F), such that said moisture content is kept between 0.1 % and 100 %, preferably higher than 50 %; and/or
the oxygen content of the gas and/or steam flow (F), such that said oxygen content is kept between 0 % and 21 %, preferably lower than 15 %.

12. Use of an apparatus according to any one of the previous claims for the thermal treatment of a product (P), such as a bulk material among others, said thermal treatment comprising any one or more of the following treatments: drying, heating, roasting, pyrolysis, gasification, or a combination thereof.

## Patentansprüche

1. Eine Vorrichtung (1) zum Trocknen eines Produkts (P), wie z.B. unter anderem eines Schüttguts, wobei die Vorrichtung aufweist:
eine Behandlungskammer (100), die zum Behandeln des Produkts (P) ausgebildet ist;
eine Erzeugungseinheit (200), die zur Erzeugung eines durch die Behandlungskammer (100) geleiteten Gas- und/oder Dampfstroms (F) ausgebildet ist;
eine Gewichtsbestimmungseinrichtung (300), die so ausgebildet ist, dass sie während der Behandlung des Produkts (P) im Wesentlichen in Echtzeit einen für das Gewicht des Produkts (P) repräsentativen Wert bestimmt;
eine Konditionierungseinrichtung (400), die so ausgebildet ist, dass sie im Wesentlichen in Echtzeit zumindest eine Eigenschaft des durch die Behandlungskammer (100) geleiteten Gas- und/oder Dampfstroms (F), in Abhängigkeit von dem bestimmten, für das Gewicht des Produkts (P) repräsentativen Wert, regelt;
wobei die Behandlungskammer (100) einen Träger (101) aufweist, der so ausgebildet ist, dass er das Produkt (P) während der Behandlung trägt, wobei der Träger (101) mit der Gewichtsbestimmungseinrichtung (300) verbunden ist, so dass die Gewichtsbestimmungseinrichtung (300) das Gewicht des Trägers (101) sowie den für das Gewicht des auf dem Träger (101) befindlichen Produkts (P) repräsentativen Wert misst,
wobei der Träger (101) mit der Gewichtsbestimmungseinrichtung (300) über zumindest ein Verbindungselement (102; 112) verbunden ist,
**dadurch gekennzeichnet, dass** die Gewichtsbestimmungseinrichtung (300) außerhalb der Behandlungskammer (100) angeordnet ist, und
dadurch, dass das zumindest eine Verbindungselement (102; 112) aus der Behandlungskammer (100) durch eine Wand (110; 110') der Behandlungskammer (100) teilweise herausragt.

2. Die Vorrichtung nach Anspruch 1, wobei das zumindest eine Verbindungselement (102; 112) unter Verwendung einer Dichtung so angeordnet ist, dass die Behandlungskammer (100) luft- und/oder gasdicht ist, wobei sich das zumindest eine Verbindungselement (102; 112) in Bezug auf die Wand (110; 110') entlang einer vertikalen Achse bewegen kann,
wobei die Dichtung vorzugsweise zwischen dem zumindest einen Verbindungselement (102; 112) und der Wand (110; 110') der Behandlungskammer (100) angeordnet ist.

3. Die Vorrichtung nach Anspruch 2, wobei die Dichtung eine flexible Dichtung (120; 120') darstellt, die so ausgebildet ist, dass sie es dem zumindest einen Verbindungselement (102; 112) ermöglicht, sich entlang der vertikalen Achse reibungsfrei zu bewegen, und/oder
wobei die Dichtung eine Flüssigkeitsdichtung (130; 130') darstellt, die so ausgebildet ist, dass sie es dem zumindest einen Verbindungselement (102; 112) ermöglicht, sich entlang der vertikalen Achse reibungsfrei zu bewegen.

4. Die Vorrichtung nach einem der vorherigen Ansprüche, wobei ein Material des zumindest einen Verbindungselements (102; 112) aus einem Material besteht, welches eine niedrige Wärmeleitfähigkeit aufweist.

5. Die Vorrichtung nach einem der vorherigen Ansprüche, wobei das zumindest eine Verbindungselement (102; 112) eine Säule (102) und die Wand (110; 110') eine Bodenwand (110) der Behandlungskammer (100) darstellt, oder
wobei das zumindest eine Verbindungselement (102; 112) ein Aufhängungselement (112) und die Wand (110; 110') eine obere Wand (110') der Behandlungskammer (100) darstellt.

6. Die Vorrichtung nach einem der vorherigen Ansprüche, wobei die Gewichtsbestimmungseinrichtung (300) mindestens eine Wägezelle umfasst;
wobei die mindestens eine Wägezelle vorzugsweise ein piezoelektrisches Element aufweist.

7. Die Vorrichtung nach einem der vorherigen Ansprüche, wobei die Erzeugungseinheit (200) so ausgebildet ist, dass sie in der Behandlungskammer (100) den Gas- und/oder Dampfstrom (F) in Aufwärtsrichtung und/oder in Abwärtsrichtung erzeugt.

8. Die Vorrichtung nach einem der vorherigen Ansprüche, wobei die Gewichtsbestimmungseinrichtung (300) so ausgebildet ist, dass sie den für das Gewicht des Produkts (P) repräsentativen Wert periodisch, zumindest alle 30 s, vorzugsweise zumindest jede Sekunde, bestimmt.

9. Die Vorrichtung nach einem der vorherigen Ansprüche, wobei die Konditionierungseinrichtung (400) so ausgebildet ist, dass sie die Regelung der zumindest einen Eigenschaft des Gas- und/oder Dampfstroms (F), in Abhängigkeit von dem bestimmten geänderten, für das Gewicht des Produkts (P) repräsentativen Wert, einstellt.

10. Die Vorrichtung nach einem der vorherigen Ansprüche, wobei die zumindest eine, durch die Konditionierungseinrichtung (400) gesteuerte Eigenschaft des Gas- und/oder Dampfstroms (F), eine oder mehrere der folgenden Eigenschaften umfasst: Temperatur, Geschwindigkeit, Feuchtigkeitsgehalt, chemische Zusammensetzung oder eine Kombination davon.

11. Die Vorrichtung nach einem der vorherigen Ansprüche, wobei die Konditionierungseinrichtung (400) so ausgebildet ist, dass sie, in Abhängigkeit von dem für das Gewicht des Produkts (P) repräsentativen bestimmten Wert, vorzugsweise in Echtzeit,
die Temperatur des Gas- und/oder Dampfstroms (F) so regelt, dass die Temperatur zwischen 20 °C und 850 °C, vorzugsweise höher als 50 °C, gehalten wird; und/oder
die Geschwindigkeit des Gas- und/oder Dampfstroms (F) so regelt, dass die Geschwindigkeit zwischen 0,1 m/s und 20 m/s, vorzugsweise höher als 0,5 m/s, gehalten wird, und/oder
den Feuchtigkeitsgehalt des Gas- und/oder Dampfstroms (F) so regelt, dass der Feuchtigkeitsgehalt zwischen 0,1 % und 100 %, vorzugsweise höher als 50 %, gehalten wird; und/oder
den Sauerstoffgehalt des Gas- und/oder Dampfstroms (F) so regelt, dass der Sauerstoffgehalt zwischen 0 % und 21 %, vorzugsweise niedriger als 15 %, gehalten wird.

12. Verwendung einer Vorrichtung nach einem der vorherigen Ansprüche zur thermischen Behandlung eines Produkts (P), wie z.B. eines Schüttguts, wobei die thermische Behandlung eine oder mehrere der folgenden Behandlungsweisen umfasst: Trocknung, Erhitzung, Röstung, Pyrolyse, Vergasung oder eine Kombination davon.

## Revendications

1. Appareil (1) de séchage d'un produit (P), comme un matériau en vrac entre autres, ledit appareil comprenant :
une chambre de traitement (100) configurée pour traiter ledit produit (P) ;
une unité de génération (200) configurée pour générer un écoulement de gaz et/ou de vapeur (F) à travers la chambre de traitement (100) ;
un moyen de détermination de poids (300) configuré pour déterminer une valeur représentative du poids dudit produit (P) sensiblement en temps réel au cours du traitement dudit produit (P) ;
un moyen de conditionnement (400) configuré pour commander sensiblement en temps réel au moins une propriété de l'écoulement de gaz et/ou de vapeur (F) à travers la chambre de traitement (100), en fonction de la valeur déterminée représentative du poids dudit produit (P) ;
dans lequel la chambre de traitement (100) comprend un support (101) configuré pour supporter le produit (P) pendant le traitement ; dans lequel ledit support (101) est relié au moyen de détermination de poids (300) de sorte que le moyen de détermination de poids (300) mesure le poids du support (101) et la valeur représentative du poids du produit (P) sur le support (101) ;
dans lequel le support (101) est relié au moyen de détermination de poids (300) par au moins un élément de liaison (102 ; 112) ;
**caractérisé en ce que** le moyen de détermination de poids (300) est situé à l'extérieur de la chambre de traitement (100) ; et
**en ce que** ledit au moins un élément de liaison (102 ; 112) fait partiellement saillie à l'extérieur de la chambre de traitement (100) à travers une paroi (110 ; 110') de la chambre de traitement (100).

2. Appareil selon la revendication 1, dans lequel l'au moins un élément de liaison (102 ; 112) est agencé en utilisant un joint de sorte que la chambre de traitement (100) soit étanche à l'air et/ou aux gaz ; dans lequel l'au moins un élément de liaison (102 ; 112) est autorisé à se déplacer par rapport à ladite paroi (110 ; 110') le long d'un axe vertical ;
dans lequel de préférence ledit joint est placé entre l'au moins un élément de liaison (102 ; 112) et la paroi (110 ; 110') de la chambre de traitement (100).

3. Appareil selon la revendication 2, dans lequel le joint comprend un joint souple (120 ; 120') configuré pour permettre à l'au moins un élément de liaison (102 ; 112) de se déplacer sans frottement le long dudit axe vertical ; et/ou
dans lequel le joint comprend un joint liquide (130 ; 130') configuré pour permettre à l'au moins un élément de liaison (102 ; 112) de se déplacer sans frottement le long dudit axe vertical.

4. Appareil selon l'une quelconque des revendications précédentes, dans lequel un matériau de l'au moins un élément de liaison (102; 112) comprend un matériau présentant une faible conductivité thermique.

5. Appareil selon l'une quelconque des revendications précédentes, dans lequel l'au moins un élément de liaison (102 ; 112) est un pilier (102) ; et dans lequel la paroi (110 ; 110') est une paroi de fond (110) de la chambre de traitement (100) ; ou
dans lequel l'au moins un élément de liaison (102 ; 112) est un élément de suspension (112) ; et
dans lequel la paroi (110 ; 110') est une paroi de sommet (110') de la chambre de traitement (100).

6. Appareil selon l'une quelconque des revendications précédentes, dans lequel le moyen de détermination de poids (300) comprend au moins un capteur de pesage ;
dans lequel de préférence l'au moins un capteur de pesage comprend un élément piézoélectrique.

7. Appareil selon l'une quelconque des revendications précédentes, dans lequel l'unité de génération (200) est configurée pour générer ledit écoulement de gaz et/ou de vapeur (F) dans une direction vers le haut et/ou dans une direction vers le bas à travers la chambre de traitement (100).

8. Appareil selon l'une quelconque des revendications précédentes, dans lequel le moyen de détermination de poids (300) est configuré pour déterminer ladite valeur représentative du poids du produit (P) périodiquement, au moins toutes les 30 secondes, de préférence au moins toutes les secondes.

9. Appareil selon l'une quelconque des revendications précédentes, dans lequel le moyen de conditionnement (400) est configuré pour ajuster la commande de l'au moins une propriété de l'écoulement de gaz et/ou de vapeur (F), en fonction de ladite valeur déterminée changée représentative du poids du produit (P).

10. Appareil selon l'une quelconque des revendications précédentes, dans lequel ladite au moins une propriété de l'écoulement de gaz et/ou de vapeur (F) commandée par le moyen de conditionnement (400) comprend l'une quelconque ou plusieurs des propriétés suivantes : température, vitesse, teneur en humidité, composition chimique, ou une combinaison de ce qui précède.

11. Appareil selon l'une quelconque des revendications précédentes, dans lequel le moyen de conditionnement (400) est configuré pour commander, de préférence en temps réel, en fonction de ladite valeur déterminée représentative du poids du produit (P) :
la température de l'écoulement de gaz et/ou de vapeur (F), de sorte que ladite température soit maintenue entre 20 °C et 850 °C, de préférence au-dessus de 50 °C ; et/ou
la vitesse de l'écoulement de gaz et/ou de vapeur (F), de sorte que ladite vitesse soit maintenue entre 0,1 m/s et 20 m/s, de préférence au-dessus de 0,5 m/s ; et/ou
la teneur en humidité de l'écoulement de gaz et/ou de vapeur (F), de sorte que ladite teneur en humidité soit maintenue entre 0,1 % et 100 %, de préférence au-dessus de 50 % ; et/ou
la teneur en oxygène de l'écoulement de gaz et/ou de vapeur (F), de sorte que ladite teneur en oxygène soit maintenue entre 0 % et 21 %, de préférence au-dessous de 15 %.

12. Utilisation d'un appareil selon l'une quelconque des revendications précédentes pour le traitement thermique d'un produit (P), comme un matériau en vrac entre autres, ledit traitement thermique comprenant l'un quelconque ou plusieurs des traitements suivants : séchage, chauffage, torréfaction, pyrolyse, gazéification ou une combinaison de ce qui précède.
